# FASCICULE DE BREVET EUROPEEN

(11) **EP 1 674 328 B1**
(45) Date de publication et mention de la délivrance du brevet: **09.11.2011**
(21) Numéro de dépôt: 05291965.1
(22) Date de dépôt: 22.09.2005
(51) Int. Cl.: B60W 10/00, B60L 11/12

(54) **Système de contrôle du fonctionnement de moyens de motorisation hybride pour vehicule automobile**
Hybridantriebssteuersystem für ein Fahrzeug
System for controlling hybrid motorization means of a car

(30) Priorité: 22.12.2004 FR 0410028
(43) Date de publication de la demande: 28.06.2006
(73) Titulaire: Peugeot Citroën Automobiles SA, 78140 Vélizy-Villacoublay (FR)
(72) Inventeur: Cluzel, Eric, 78550 Gressey (FR)

(56) Documents cités:
- EP-A- 0 901 930
- EP-A- 1 375 241
- FR-A- 2 847 523
- US-A- 6 116 363

## Description

La présente invention concerne un système de contrôle du fonctionnement de moyens de motorisation hybride pour véhicule automobile.

Plus particulièrement, l'invention concerne un système de contrôle du fonctionnement de moyens de motorisation hybride comprenant au moins un moteur thermique adapté pour réaliser une traction thermique du véhicule, des moyens formant moto-générateur adaptés pour réaliser une traction électrique du véhicule et des moyens de stockage d'énergie électrique associés à des moyens de détermination de leur état de charge, du type comprenant des moyens de sélection du type de traction du véhicule selon une cartographie prédéterminée du type de traction en fonction de conditions de roulage du véhicule.

Dans un véhicule hybride, la traction du véhicule est réalisée alternativement par un moteur thermique et un moteur électrique. Le moteur électrique est alimenté en énergie par des moyens de stockage d'énergie électrique, par exemple constitués d'une batterie, qui sont rechargés par une génératrice entraînée par le moteur thermique.

Dans ce type de véhicule, les moyens de stockage d'énergie électrique jouent un rôle central et conditionnent sensiblement le fonctionnement des moyens de motorisation. On comprendra par exemple que lorsque l'état de charge de ces derniers est faible, la traction du véhicule par le moteur électrique est difficilement envisageable et il est alors nécessaire de les recharger. Par ailleurs, ils constituent un des éléments fragiles et coûteux du véhicule. En effet, une mauvaise utilisation de ceux-ci, notamment quand leur état de charge est faible, peut se traduire par une dégradation de leurs performances et donc de leur durée de vie, ce qui a pour conséquence, non seulement une dégradation du fonctionnement des moyens de motorisation, mais également une augmentation sensible du coût d'entretien du véhicule.

Il est connu notamment du document EP-A-0 901 930, un système de contrôle de moyens de motorisation hybride pour véhicule automobile conforme au préambule de la revendication 1. Toutefois, ce document ne prévoit pas de minimiser les dégradations des performances des moyens de stockage et donc d'augmenter leur durée de vie.

Le but de l'invention est de résoudre le problème susmentionné en proposant un système de contrôle du fonctionnement des moyens de motorisation qui optimise l'utilisation des moyens de stockage d'énergie électrique.

A cet effet, l'invention a pour objet un système de contrôle du fonctionnement de moyens de motorisation hybride pour véhicule automobile conforme à l'objet de la partie caractérisante de la revendication 1.

Suivant des modes particuliers de réalisation, le système comporte une ou plusieurs des caractéristiques suivantes :
- les moyens de modification sont adaptés pour comparer l'état de charge des moyens de stockage à au moins une plage prédéterminée d'états de charge faibles et pour réduire au moins une zone de sollicitation en décharge des moyens de stockage de la cartographie du type de traction lorsque l'état de charge est compris dans la au moins une plage ;
- la cartographie du type de traction comprend au moins une zone prédéterminée de traction électrique, et les moyens de modification comprennent :
   - des premiers moyens de comparaison adaptés pour comparer l'état de charge des moyens de stockage d'énergie électrique à une première plage prédéterminée d'états de charge faibles ; et
   - des moyens de réduction de la zone de traction électrique lorsque l'état de charge est compris dans cette première plage.
- les moyens de réduction sont adaptés pour réduire progressivement la au moins une zone de traction électrique à mesure que l'état de charge diminue ;
- la au moins une zone de traction électrique est une zone de valeurs faibles de vitesse du véhicule et de couple appliqué aux roues motrices du véhicule, délimitée par une limite prédéterminée d'extinction du moteur thermique/allumage des moyens formant moto-générateur, et les moyens de réduction sont adaptés pour abaisser cette limite jusqu'à une limite prédéterminée minimale ;
- la première plage d'états de charge faibles est égale à une plage prédéterminée d'état de charges [*α*,*δ*] où δ est une valeur prédéterminée vérifiant la relation δ ≥α+0,25*×*(β*-* α), et α et *β* sont des états prédéterminés de charge minimale et maximale nominaux des moyens de stockage respectivement ;
- la cartographie du type de traction comprend au moins une zone de traction thermique, et les moyens de modification comprennent :
   - des seconds moyens de comparaison adaptés pour comparer l'état de charge des moyens de stockage d'énergie électrique à une seconde plage prédéterminée d'états de charge faibles ; et
   - des moyens d'augmentation de la zone de traction thermique lorsque l'état de charge est compris dans cette seconde plage.
- les moyens d'augmentation sont adaptés pour augmenter progressivement la au moins une zone de traction thermique à mesure que l'état de charge diminue ;
- la au moins une zone de traction thermique est une zone prédéterminée de valeurs élevées de vitesse du véhicule et de couple appliqué aux roues motrices du véhicule, délimitée par une limite prédéterminée de démarrage du moteur thermique/extinction des moyens formant moto-générateur, et les moyens d'augmentation sont adaptés pour abaisser cette limite de démarrage du moteur thermique/extinction des moyens formant moto-générateur jusqu'à une limite prédéterminée minimale ;
- la seconde plage d'états de charge faibles est égale à une plage prédéterminée d'états de charge [α,σ] où σ est une valeur prédéterminée vérifiant la relation *σ≥α*+ 0,20×(*β-α*)*,* et α et β sont des états prédéterminés de charge minimale et maximale nominaux des moyens de stockage respectivement ; et
- les valeurs *δ* et σ vérifient en outre la relation *σ ≤ δ .*

La présente invention sera mieux comprise à la lecture de la description qui va suivre, uniquement donnée à titre d'exemple, et faite en relation avec les dessins annexés dans lesquels:
- la figure 1 est une vue schématique du système de contrôle selon l'invention associé à des moyens de motorisation du type présentant une architecture à un arbre ;
- la figure 2 est une cartographie du type de traction utilisée par les moyens de sélection du type de traction du système de la figure 1, lorsque l'état de charge des moyens de stockage d'énergie électrique est élevé ;
- la figure 3 est un ensemble de courbes illustrant la réduction de la zone de traction électrique mise en oeuvre par les moyens de réduction de la zone de traction électrique entrant dans la constitution du système de la figure 1 ; et
- la figure 4 est un ensemble de courbe illustrant l'augmentation de la zone de traction thermique mise en oeuvre par les moyens d'augmentation de la zone de traction thermique entrant dans la constitution de la figure 1.

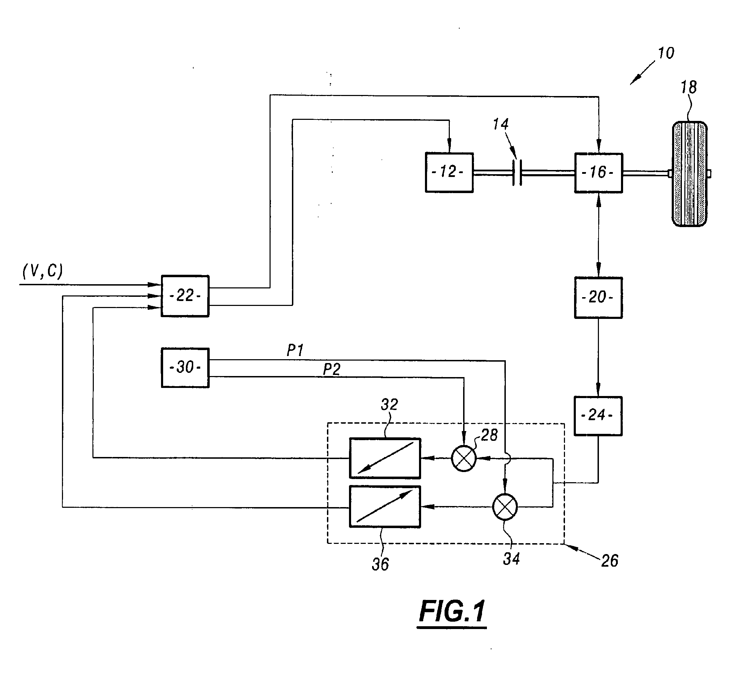

On a représenté sur la figure 1, un système de contrôle du fonctionnement de moyens 10 de motorisation hybride pour véhicule automobile, par exemple des moyens de motorisation du type présentant une architecture à un arbre.

De tels moyens de motorisation comprennent de manière classique un moteur thermique 12 raccordé par un embrayage piloté 14 à des moyens formant moto-générateur 16. Les moyens formant moto-générateur 16 sont par ailleurs raccordés à des roues motrices 18 du véhicule et à des moyens de stockage d'énergie électrique 20, constitués par exemple d'une batterie.

Le moteur thermique 12 et les moyens 16 formant moto-générateur sont en outre raccordés à des moyens 22 de sélection du type de traction du système de contrôle. Les moyens 22 de sélection sont adaptés pour réaliser une sélection du type de traction conformément à une cartographie prédéterminée en fonction de conditions de roulage du véhicule, par exemple des conditions portant sur la vitesse V du véhicule et le couple C appliqué aux roues motrices 18, comme cela sera expliqué plus en détail par la suite. A cet effet, les moyens 22 de sélection reçoivent en entrée les valeurs de la vitesse V du véhicule et du couple C appliqué aux roues motrices 18.

Comme cela est connu de l'état de la technique, les moyens formant moto-générateur sont adaptés pour fonctionner soit en moteur électrique soit génératrice en fonction du type de traction sélectionnée.

Lorsque la traction sélectionnée par les moyens 22 de sélection est la traction électrique, les moyens 20 de stockage délivrent de la puissance électrique aux moyens 16 formant moto-générateur qui fonctionnent en moteur électrique pour entraîner en rotation les roues motrices 18.

Lorsque la traction sélectionnée par les moyens 22 de sélection est la traction thermique, le moteur thermique 12 est en fonctionnement et entraîne en rotation, via l'embrayage piloté, les moyens 16 formant moto-générateur qui fonctionnent en génératrice et entraînent en rotation les roues motrices 18. L'énergie électrique générée par les moyens 16 formant moto-générateur est alors délivrée aux moyens 20 de stockage pour leur recharge.

Enfin, les moyens 20 de stockage sont associés à des moyens 24 de détermination de leur état de charge, ci-après désigné EC, pour des besoins de surveillance de celui-ci par exemple.

Le système de contrôle du fonctionnement des moyens 10 de motorisation comprend en outre des moyens 26 de modification de la cartographie du type de traction des moyens 22 de sélection en fonction de l'état de charge déterminé par les moyens 24 de détermination.

Plus particulièrement, les moyens de modification sont adaptés pour modifier la cartographie du type de traction lorsque l'état de charge des moyens 20 de stockage est faible, en réduisant au moins une zone de sollicitation en décharge des moyens 20 de stockage de la cartographie du type de traction, comme cela est expliqué plus en détail par la suite.

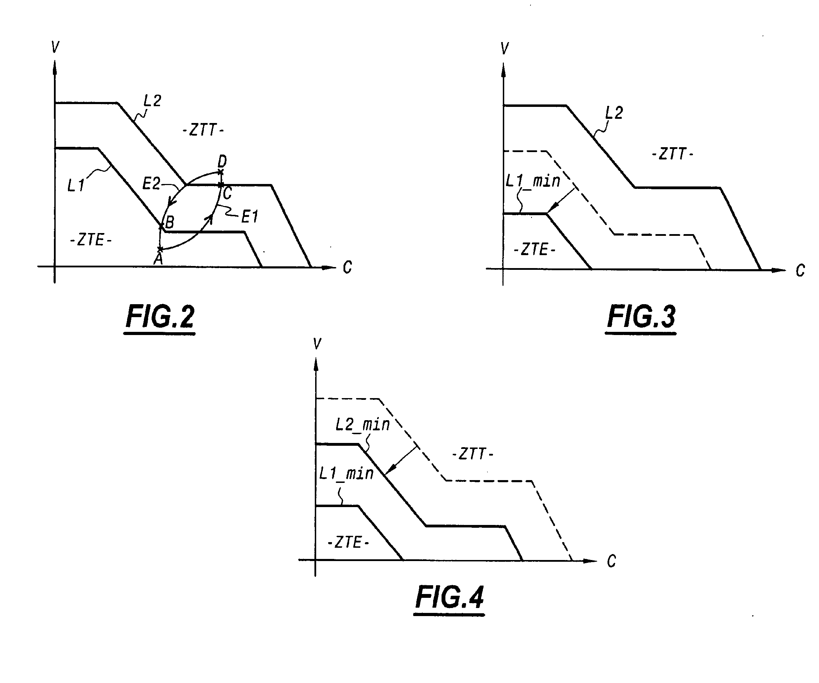

La figure 2 est une cartographie du type de traction utilisée par défaut par les moyens de sélection du type de traction, lorsque l'état de charge des moyens 20 de stockage d'énergie électrique est élevé. Cette cartographie est définie en fonction de la vitesse V du véhicule et du couple C appliqué aux roues motrices.

Elle comprend une zone de traction électrique, ci-après désignée ZTE, et une zone de traction thermique, ci-après désignée ZTT. La zone de traction électrique ZTE est définie pour un ensemble prédéterminé de valeurs faibles de vitesse V et de couple C pour lequel la traction du véhicule est réalisée par les moyens 16 formant moto-générateur. Cette zone est délimitée par une limite prédéterminée L1 d'extinction du moteur thermique/démarrage des moyens formant moto-générateur, c'est-à-dire leur activation en moteur.

La zone de traction thermique ZTT est quant à elle définie pour un ensemble prédéterminé de valeurs élevées de vitesse V et de couple C pour lequel la traction du véhicule est réalisée par le moteur thermique 12. Cet ensemble est distinct de celui associé à la zone ZTE, et la zone ZTT est délimitée par une limite prédéterminée L2 de démarrage du moteur thermique/extinction des moyens formant moto-générateur, c'est-à-dire leur désactivation en moteur.

Enfin, il existe une troisième zone intermédiaire entre la zone ZTE et la zone ZTT. Dans cette zone les deux types de traction sont possibles en fonction des états passés de la vitesse V et du couple C. La zone ZTE et éventuellement cette troisième zone constituent donc des zones de sollicitation en décharge des moyens 20 de stockage.

Si la vitesse V et le couple C sont faibles, c'est-à-dire appartenant à l'ensemble de valeurs associé à la zone ZTE comme représenté par exemple par un point A dans la zone ZTE, la traction sélectionnée est la traction électrique. Les moyens formant moto-générateur fonctionnent alors en moteur électrique.

Lorsque la vitesse V et/ou le couple C augmentent, de sorte que, par exemple, le couple de valeurs (V,C) se déplace vers un point D de la zone ZTT, en suivant une courbe E1, la limite L2 est franchie. Lors du franchissement de la limite L2, par exemple au point C, les moyens 22 de sélection stoppent le fonctionnement en moteur électrique des moyens formant moto-générateur et démarrent le moteur thermique, de sorte que la traction sélectionnée est la traction thermique.

Comme on peut le noter, la troisième zone correspond dans ce cas à une zone de traction électrique du véhicule.

Si la vitesse V et le couple C sont élevés, c'est-à-dire appartiennent à l'ensemble de valeurs associés à la zone ZTT, comme représenté par exemple par le point D de la zone ZTT, la traction sélectionnée est la traction thermique. Le moteur thermique est alors en fonctionnement.

Lorsque la vitesse et/ou le couple C diminuent, de sorte que, par exemple, le couple de valeurs (V,C) se déplace vers le point A de la zone ZTE en suivant une courbe E2, la limite L1 est franchie. Lors du franchissement de la limite L1, par exemple au point B, les moyens de sélection 22 éteignent le moteur thermique et démarrent les moyens formant moto-générateur en moteur électrique. La traction sélectionnée par les moyens 22 de sélection est alors la traction électrique.

Comme on peut le noter, la troisième zone correspond dans ce cas à une zone de traction thermique du véhicule.

Le fait que la limite d'extinction du moteur thermique/démarrage des moyens formant moto-générateur et la limite de démarrage du moteur thermique/extinction des moyens formant moto-générateur sont distinctes est particulièrement avantageux pour éviter des oscillations de fonctionnement entre la traction thermique et la traction électrique.

De manière classique, les zones de traction électrique ZTE et thermique ZTT ne dépendent pas de l'état de charge des moyens 20 de stockage d'énergie électrique, de sorte que la traction électrique peut être sélectionnée alors même que l'état de charge de ceux-ci est faible et ne permet pas un fonctionnement satisfaisant des moyens de motorisation.

Les moyens 26 de modification de la cartographie du type de traction du véhicule sont adaptés pour modifier la cartographie précédemment décrite lorsque l'état de charge des moyens 20 de stockage est faible, afin de minimiser la sollicitation de décharge des moyens de stockage et permettre à ceux-ci de se recharger plus longtemps.

A cet effet, ils comprennent, en se référant à nouveau à la figure 1, des premiers moyens 28 de comparaison adaptés pour comparer l'état de charge déterminé par les moyens 24 de détermination de l'état de charge à une première plage P1 prédéterminée d'états de charges faibles, mémorisée dans des moyens 30 de mémorisation du système de contrôle.

Les premiers moyens 28 de comparaison sont raccordés à des moyens 32 de réduction de la zone de traction électrique ZTE. Ces moyens 32 de réduction sont adaptés pour réduire la zone ZTE de la cartographie lorsque les premiers moyens 38 de comparaison déterminent que l'état de charge est compris dans la plage P1.

Plus particulièrement, les moyens 32 de réduction sont adaptés pour abaisser de manière progressive la limite d'extinction du moteur thermique/démarrage des moyens formant moto-générateur jusqu'à une limite prédéterminée L1_min minimale à mesure que l'état de charge des moyens 20 de stockage diminue dans la plage P1. Cette réduction est par exemple réalisée de manière linéaire en translatant la limite d'extinction du moteur thermique/démarrage des moyens formant moto-générateur conformément à la flèche illustrée sur la figure 3. La limite L1_min est alors atteinte lorsque l'état de charge des moyens de stockage est sensiblement égal à la borne inférieure de la plage P1.

En abaissant la limite d'extinction du moteur thermique/démarrage des moyens formant moto-générateur, le moteur thermique est éteint de manière plus tardive, de sorte que les moyens 20 de stockage sont à la fois chargés plus longtemps et moins sollicités en décharge.

Par ailleurs, lorsque l'état de charge des moyens 20 de stockage augmente dans la plage P1, la limite d'extinction du moteur thermique/démarrage des moyens formant moto-générateur est augmentée, d'une manière inverse à celle dont elle est abaissée, pour atteindre la limite L1 lorsque l'état de charge est sensiblement égal à la borne supérieure de la plage P1.

La limite L1_min peut se réduire au point O correspondant au couple de valeurs (V,C) égal au couple (0,0). Ainsi, lorsque les moyens 20 de stockage sont déchargés de manière importante, ils ne sont plus sollicités pour alimenter les moyens formant moto-générateur.

Les moyens 26 de modification comprennent également des seconds moyens 34 de comparaison adaptés pour comparer l'état de charge déterminé par les moyens 24 de détermination à une seconde plage P2 prédéterminée d'états de charge faibles mémorisée dans les moyens 30 de mémorisation. Les moyens 26 de modification comprennent en outre, raccordés aux seconds moyens 34 de comparaison, des moyens 36 d'augmentation de la zone de traction thermique. Ces moyens 36 d'augmentation sont adaptés pour augmenter la zone ZTT de la cartographie lorsque les seconds moyens de comparaison déterminent que l'état de charge est compris dans la plage P2.

Plus particulièrement, les moyens 36 d'augmentation sont adaptés pour abaisser de manière progressive la limite de démarrage du moteur thermique/extinction des moyens formant moto-générateur jusqu'à une limite prédéterminée L2_min minimale à mesure que l'état de charge des moyens 20 de stockage diminue dans la plage P2. Cette réduction est par exemple réalisée de manière linéaire en translatant la limite de démarrage du moteur thermique/extinction des moyens formant moto-générateur conformément à la flèche illustrée sur la figure 3. La limite L2_min est alors atteinte lorsque l'état de charge est sensiblement égal à la borne inférieure de P2.

Par ailleurs, lorsque l'état de charge augmente dans la plage P2, la limite de démarrage du moteur thermique/extinction des moyens formant moto-générateur est augmentée, d'une manière inverse à celle dont elle est abaissée, pour atteindre la limite L2 lorsque l'état de charge est sensiblement égal à la borne supérieure de la plage P2.

En abaissant la limite de démarrage du moteur thermique/extinction des moyens formant moto-générateur, le moteur thermique est démarré plus tôt, de sorte que les moyens 20 de stockage sont à la fois moins sollicités en décharge et chargés plus tôt.

Lorsque la limite L1_min se réduit au point O, la limite L2_min se réduit également au point O, de sorte que seul le moteur thermique est utilisé pour la traction du véhicule.

Les moyens 20 de stockage d'énergie électrique subissent des dégradations minimales de leurs performances lorsque leur état de charge est compris dans une plage prédéterminée nominale d'états de charge [*α*,*β*] où *α* et *β* sont des états prédéterminés de charge minimale et maximale nominaux.

En choisissant la plage P1 égale à la plage [*α,δ*] où *δ* est une valeur prédéterminée vérifiant la relation *δ*≥*α*+0,25×(*β*-*α*) et la plage P2 égale à la plage [α,σ] où σ est une valeur prédéterminée vérifiant la relation σ≥*α*+ 0,20×(*β*-*α*), le système de contrôle selon l'invention est alors adapté pour sensiblement limiter la probabilité que l'état de charge des moyens 20 de stockage d'énergie électrique soit inférieur à *α* , ce qui minimise les dégradations des performances des moyens 20 de stockage et donc augmente leur durée de vie.

De préférence, on choisit une valeur σ vérifiant de plus la relation σ ≤ *δ* , ce qui permet de débuter la réduction de la zone ZTE avant la réduction de la zone ZTT.

Bien entendu d'autres modes de réalisation du système selon l'invention sont possibles. L'invention peut également s'appliquer à des moyens de motorisation présentant une architecture à deux arbres et/ou des moyens de sélection utilisant une cartographie à la topologie plus complexe, par exemple comprenant plusieurs zones de traction électrique ou thermique.

Un autre mode de réalisation consiste également à n'utiliser que les premiers moyens de comparaison et les moyens de réduction de la zone de traction électrique afin de ne contrôler que la limite d'extinction du moteur thermique/démarrage des moyens formant moto-générateur.

D'une manière analogue, un autre mode de réalisation du système selon l'invention consiste à n'utiliser que les seconds moyens de comparaison et les moyens d'augmentation de la zone de traction thermique afin de ne contrôler que la limite de démarrage du moteur thermique/extinction des moyens formant moto-générateur.

## Revendications

1. Système de contrôle du fonctionnement de moyens (10) de motorisation hybride pour véhicule automobile, comprenant au moins un moteur thermique (12) adapté pour réaliser une traction thermique du véhicule, des moyens (16) formant moto-générateur adaptés pour réaliser une traction électrique du véhicule et des moyens (20) de stockage d'énergie électrique associés à des moyens (24) de détermination de leur état de charge, du type comprenant des moyens (22) de sélection du type de traction du véhicule selon une cartographie prédéterminée du type de traction en fonction de conditions de roulage du véhicule, et des moyens (26) de modification de ladite cartographie en fonction de l'état de charge des moyens de stockage d'énergie électrique.
ladite cartographie comprenant au moins une zone de traction électrique (ZTE), de valeurs faibles de vitesse (V) du véhicule et de couple (C) appliqué aux roues motrices du véhicule, et délimitée par une limite prédéterminée (L1) d'extinction du moteur thermique/allumage des moyens formant moto-générateur,
les moyens (26) de modification comportant :
- des premiers moyens (28) de comparaison adaptés pour comparer l'état de charge des moyens (20) de stockage d'énergie électrique à une première plage prédéterminée (P1) d'états de charge faible ;
- des moyens (32) de réduction de la au moins une zone de traction électrique (ZTE) lorsque l'état de charge est compris dans cette première plage (P1), les moyens (32) de réduction étant adaptés pour abaisser progressivement la limite (L1) de la au moins une zone de traction électrique (ZTE) jusqu'à une limite prédéterminée minimale (L1 min) à mesure que l'état de charge diminue,
**caractérisée en ce que** la première plage (P1) d'états de charge faibles est égale à une plage prédéterminée d'état de charges [α,δ] où δ est une valeur prédéterminée vérifiant la relation δ≥α+0,25×(β-α), et α et β sont des états prédéterminés de charge minimale et maximale nominaux des moyens (20) de stockage respectivement.

2. Système selon la revendication 1, **caractérisé en ce que** la cartographie du type de traction comprend au moins une zone de traction thermique (ZTT), et **en ce que** les moyens (26) de modification comprennent :
- des seconds moyens (34) de comparaison adaptés pour comparer l'état de charge des moyens de stockage d'énergie électrique à une seconde plage prédéterminée d'états de charge faibles (P2) ; et
- des moyens (36) d'augmentation de la zone de traction thermique (ZTT) lorsque l'état de charge est compris dans cette seconde plage.

3. Système selon la revendication 1 ou 2, **caractérisé en ce que** les moyens (36) d'augmentation sont adaptés pour augmenter progressivement la au moins une zone de traction thermique (ZTT) à mesure que l'état de charge diminue.

4. Système selon la revendication 2 ou 3, **caractérisé en ce que** la au moins une zone de traction thermique (ZTT) est une zone prédéterminée de valeurs élevées de vitesse (V) du véhicule et de couple (C) appliqué aux roues motrices du véhicule, délimitée par une limite prédéterminée (L2) de démarrage du moteur thermiquelextinction des moyens formant moto-générateur, et **en ce que** les moyens (36) d'augmentation sont adaptés pour abaisser cette limite de démarrage du moteur thermiquelextinction des moyens formant moto-générateur jusqu'à une limite prédéterminée minimale (L2_min).

5. Système selon l'une quelconque des revendications 2 à 4, **caractérisé en ce que** la seconde plage (P2) d'états de charge faibles est égale à une plage prédéterminée d'états de charge [α, σ] où σ est une valeur prédéterminée vérifiant la relation σ≥α+0,20×(β-α), et α et β sont des états prédéterminés de charge minimale et maximale nominaux des moyens (20) de stockage respectivement.

6. Système selon les revendications 1 et 5, **caractérisé en ce que** les valeurs δ et σ vérifient en outre la relation σ≤δ*.*

## Claims

1. System for controlling the operation of hybrid drive means (10) for a motor vehicle, comprising at least a heat engine (12) adapted to provide thermal traction of the vehicle, means (16) forming a motor-generator and adapted to provide electric traction of the vehicle, and electrical energy storage means (20) associated with means (24) for determining the state of charge thereof, of the type comprising means (22) for selecting the type of traction of the vehicle according to a predetermined mapping of the type of traction as a function of rolling conditions of the vehicle, and means (26) for modifying said mapping as a function of the state of charge of the electrical energy storage means, said mapping comprising at least one electric traction region (ZTE), low speed (V) values of the vehicle and a torque (C) applied to the drive wheels of the vehicle, and defined by a predetermined limit (L1) for cutting off the heat engine / starting the means forming a motor-generator, the modification means (26) comprising:
- first comparison means (28) adapted to compare the state of charge of the electrical energy storage means (20) with a first predetermined range (P1) of states of low charge;
- means (32) for reducing the at least one electric traction region (ZTE) when the state of charge is within this first range (P1), the reduction means (32) being adapted to lower the limit (L1) of the at least one electric traction region (ZTE) progressively until a predetermined minimum limit (L1 min) as the state of charge decreases,
**characterised in that** the first range (P1) of low states of charge is equal to a predetermined range of states of charge [α*,*δ] where δ is a predetermined value satisfying the relationship δ ≥ α + 0.25 × (β - α), and α and β are, respectively, predetermined states of nominal minimum and maximum charge of the storage means (20).

2. System according to claim 1, **characterised in that** the mapping of the type of traction comprises at least one thermal traction region (ZTT) and **in that** the modification means (26) comprise:
- second comparison means (34) adapted to compare the state of charge of the electrical energy storage means with a second predetermined range of low states of charge (P2); and
- means (36) for increasing the thermal traction region (ZTT) when the state of charge is within this second range.

3. System according to either claim 1 or claim 2, **characterised in that** the increasing means (36) are adapted to increase the at least one thermal traction region (ZTT) progressively as the state of charge decreases.

4. System according to either claim 2 or claim 3, **characterised in that** the at least one thermal traction region (ZTT) is a predetermined zone of high speed (V) values of the vehicle and a torque (C) applied to the drive wheels of the vehicle, defined by a predetermined limit (L2) for starting the heat engine / cutting off the means forming a motor-generator, and **in that** the increasing means (36) are adapted to lower this limit for starting the heat engine / cutting off the means forming a motor-generator until a predetermined minimum limit (L2_min).

5. System according to any one of claims 2 to 4, **characterised in that** the second range (P2) of low states of charge is equal to a predetermined range of states of charge [α, σ] where σ is a predetermined value satisfying the relationship σ ≥ α + 0.20 × (β - α), and α and β are, respectively, predetermined states of nominal minimum and maximum charge of the storage means (20).

6. System according to claims 1 and 5, **characterised in that** the values δ and σ further satisfy the relationship σ≤δ.

## Patentansprüche

1. Überwachungssystem für den Betrieb von Hybrid-Antriebsvorrichtungen (10) für Kraftfahrzeuge, umfassend zumindest einen Verbrennungsmotor (12), der angepasst ist, um für einen thermischen Antrieb des Fahrzeugs zu sorgen, Vorrichtungen (16) zur Bildung eines Antriebsgenerators, die angepasst sind, um für einen elektrischen Antrieb des Fahrzeugs zu sorgen, und Vorrichtungen (20) zum Speichern von elektrischer Energie, die Vorrichtungen (24) zur Bestimmung ihres Ladezustands zugeordnet sind, in der Art, dass sie Vorrichtungen (22) zur Auswahl des Antriebstyps des Fahrzeugs entsprechend einer vorbestimmten Kartografie des Antriebstyps je nach Fahrbedingungen des Fahrzeugs umfassen, sowie Vorrichtungen (26) zum Verändern der besagten Kartografie je nach Ladezustand der Vorrichtungen zum Speichern von elektrischer Energie.
wobei die besagte Kartografie zumindest einen elektrischen Antriebsbereich (ZTE) mit geringen Geschwindigkeitswerten (V) des Fahrzeugs und mit einem Drehmoment (C), das auf die Antriebsräder des Fahrzeugs angewandt wird, umfasst, und der durch ein vorbestimmtes Limit (L1) zum Abschalten des Verbrennungsmotors / Einschalten der Vorrichtungen zur Bildung eines Antriebsgenerators begrenzt wird,
wobei die Änderungsvorrichtungen (26) folgendes umfassen:
- erste Vergleichsvorrichtungen (28) die angepasst sind, um den Ladezustand der Vorrichtungen (20) zum Speichern von elektrischer Energie mit einem ersten vorbestimmten Bereich (P1) von Zuständen geringer Aufladung zu vergleichen;
- Vorrichtungen (32) zur Verringerung von dem zumindest einen elektrischen Antriebsbereich (ZTE), wenn der Ladestatus in diesem ersten Bereich (P1) enthalten ist, wobei die Vorrichtungen (32) zur Verringerung angepasst sind, um das Limit (L1) von zumindest einem elektrischen Antriebsbereich (ZTE) nach und nach bis zu einem vorbestimmten Mindestlimit (L1 min) in dem Maße abzusenken, wie sich die Ladung verringert,
**dadurch gekennzeichnet, dass** der erste Bereich (P1) der geringen Ladezustände gleich einem vorbestimmten Bereich für Ladezustände [α,δ] ist, wobei δ ein vorbestimmter Wert zur Überprüfung der Relation δ≥α + 0,25 x (β - α) ist, und α und β jeweils vorbestimmte minimale und maximale Nennladezustände der Speichervorrichtungen (20) sind.

2. System nach Anspruch 1, **dadurch gekennzeichnet, dass** die Kartografie des Antriebstyps zumindest einen thermischen Antriebsbereich (ZTT) umfasst, und **dadurch**, dass die Änderungsvorrichtungen (26) folgendes umfassen:
- zweite Vergleichsvorrichtungen (34) die angepasst sind, um den Ladestatus der Vorrichtungen zum Speichern von elektrischer Energie mit einem zweiten vorbestimmten Bereich (P2) von Zuständen geringer Aufladung zu vergleichen; und
- Vorrichtungen (36) zum Erhöhen des thermischen Antriebsbereiches (ZTT), wenn der Ladestatus in diesem zweiten Bereich enthalten ist.

3. System nach Anspruch 1 oder 2, **dadurch gekennzeichnet, dass** die Erhöhungsvorrichtungen angepasst sind, um zumindest den einen thermischen Antriebsbereich (ZTT) in dem Maße nach und nach zu erhöhen, wie sich die Ladung verringert.

4. System nach Anspruch 2 oder 3, **dadurch gekennzeichnet, dass** zumindest der eine thermische Antriebsbereich (ZTT) ein vorbestimmter Bereich mit hohen Geschwindigkeitswerten (V) des Fahrzeugs und mit einem Drehmoment (C), das auf die Antriebsräder des Fahrzeugs angewandt wird, ist, der durch ein vorbestimmtes Limit (L2) zum Starten des Verbrennungsmotors / Abschalten der Vorrichtungen zur Bildung eines Antriebsgenerators begrenzt wird, und **dadurch**, dass die Erhöhungsvorrichtungen (36) angepasst sind, um dieses Limit zum Starten des Verbrennungsmotors / Abschalten der Vorrichtungen zur Bildung eines Antriebsgenerators bis zu einem vorbestimmten Mindestlimit (L2_min) abzusenken.

5. System nach irgendeinem der Ansprüche 2 bis 4, **dadurch gekennzeichnet, dass** der zweite Bereich (P2) von Zuständen geringer Aufladung gleich einem vorbestimmten Bereich für Ladezustände [α, σ] ist, wobei σ ein vorbestimmter Wert zur Überprüfung der Relation σ ≥ α + 0,20 x (β - α) ist, und α und β jeweils vorbestimmte minimale und maximale Nennladungszustände der Speichervorrichtungen (20) sind.

6. System nach den Ansprüchen 1 und 5, **dadurch gekennzeichnet, dass** die Werte δ und σ darüber hinaus die Relation σ ≤ δ überprüfen.
